# EUROPÄISCHE PATENTSCHRIFT

(11) **EP 0 833 066 B1**
(45) Veröffentlichungstag und Bekanntmachung des Hinweises auf die Patenterteilung: **28.02.2001**
(21) Anmeldenummer: 97113725.2
(22) Anmeldetag: 08.08.1997
(51) Int. Cl.: F16B 19/05

(54) **Nietbolzen**
Riveting lockbolt
Goujon de rivetage

(30) Priorität: 26.09.1996 DE 19639524
(43) Veröffentlichungstag der Anmeldung: 01.04.1998
(73) Patentinhaber: Gesellschaft für Befestigungstechnik Gebr. Titgemeyer GmbH & Co. KG., D-49084 Osnabrück (DE)
(72) Erfinder: Grandt, Jörg, 49565 Bramsche (DE)
(74) Vertreter: Busse & Busse Patentanwälte

(56) Entgegenhaltungen:
- GB-A- 2 202 293
- US-A- 2 754 703
- US-A- 3 915 053

## Beschreibung

Die Erfindung bezieht sich auf einen Nietbolzen nach dem Oberbegriff des Anspruches 1.

Herkömmliche Nietbolzen der eingangs genannten Art weisen einen Schaft auf, der einen in der Nietbohrung verbleibenden Bereich, einen daran anschließenden Konterschaftbereich sowie einen von diesem über eine Sollbruchstelle abzutrennenden Zugbereich für ein Vernietungswerkzeug aufweist.

Der Konterschaftbereich ist zumeist mit mehreren den Schaft parallel umlaufenden Schließrillen ausgestattet und wird von einem Konterringkörper in Gestalt eines Schließringes umgriffen, der bei der Montage an die parallelen Schließrillen angelegt wird. An den Konterschaftbereich schließt sich eine Sollbruchstelle an, die einen daran anschließenden Zugbereich von dem Konterschaftbereich abtrennbar macht. Der Zugbereich wird zum Angreifen eines Vernietungswerkzeuges während der Montage benötigt, mit dessen Hilfe der Nietkopf gegen die Bauteile gezogen und dadurch zur Anlage eines konternden Schließringes eine Vorspannung erzeugt wird. Nach Fertigstellung der Montage wird der Zugbereich abgetrennt. Die Vorspannung bleibt durch den angelegten Schließring erhalten.

Fertigungsbedingt schließt sich an den Konterschaftbereich ein als Walzgrat bezeichneter glatter Bereich vor der Sollbruchstelle an, der jedoch keine Funktion innehat und in seiner axialen Länge klein gegenüber dem Durchmesser des Nietbolzens ist.

Demgegenüber liegt der Erfindung das Problem zugrunde, den Funktionsbereich von Nietbolzen zu erweitern.

Die Erfindung löst das Problem mit den Merkmalen des Anspruches 1. Hinsichtlich weiterer vorteilhafter Ausgestaltungen wird auf die Ansprüche 2 bis 6 verwiesen.

Durch die Ausbildung eines sich an den Konterschaftbereich anschließenden Funktionalschaftbereiches ist es möglich, den Nietbolzen nicht allein zur vorgespannten Verbindung von Bauteilen zu verwenden, sondern diesen Funktionalschaftbereich z. B. zur Ein- oder Aufhängung und Abstützung von zusätzlichen Teilen, beispielsweise Haken, Ösen, Federn oder Verschlüssen, nutzen zu können.

Damit können zusätzliche Abstützungselemente für die erwähnten anzuordnenden Teile eingespart werden, ebenso ist die Montage zusätzlicher Abstützungselemente, die in den Bauteilen verschraubt oder anders gesichert werden müßten, verzichtbar.

Der Funktionalschaftbereich kann zusätzlich als Mitnehmerschaft für beispielsweise Federn oder steuernde Teile verwendet werden.

Damit sind Neukonstruktionen möglich, die die Einsatzmöglichkeiten von Nietbolzen erheblich erweitern.

Weitere Einzelheiten und Vorteile ergeben sich aus der Zeichnung sowie der nachfolgenden Beschreibung mehrerer Ausführungsbeispiele.

In der Zeichnung zeigen:
- Fig. 1: einen erfindungsgemäßen Nietbolzen vor der Montage,
- Fig. 2: einen erfindungsgemäßen Nietbolzen nach Durchführung der Montage,
- Fig. 3 bis Fig. 7: unterschiedliche Varianten des Funktionalschaftbereiches,
- Fig. 8 bis Fig. 12: unterschiedliche Varianten des Nietkopfes.

Im einzelnen weist der Nietbolzen 1 einen Nietkopf 2 auf, an den sich der im montierten Zustand der Teile in der Nietbohrung befindliche Schaftbereich 3 anschließt, der fortgesetzt wird von dem Konterschaftbereich 4. Dieser weist parallel verlaufende Schließrillen 5 auf, an die im montierten Zustand der Teile der Konterringkörper 6 angedrückt ist. An den Konterschaftbereich schließt sich der Funktionalschaftbereich 7 an, dessen Länge l in Richtung der Längsachse des Schaftes zumindest etwa halb so groß wie der Durchmesser d des Nietschaftes im Bereich der Nietbohrung ist. Damit unterscheidet sich der hier angegebene Funktionalschaftbereich hinsichtlich seiner Ausdehnung deutlich von dem bisher schon vorhandenen, aber funktionslosen Walzgratbereich, der sich an den Konterschaftbereich 4 anschloß und aufgrund herstellungsbedingter Prozesse unvermeidlich war. Dieser Bereich hatte eine axiale Längenausdehnung von maximal 0,2 bis 0,3 x dem Durchmesser d des Nietschaftes im Bereich der Nietbohrung.

Der vorliegende Funktionalschaftbereich 7 kann in verschiedensten denkbaren Ausgestaltungen ausgebildet sein, je nach Gebrauchszweck.

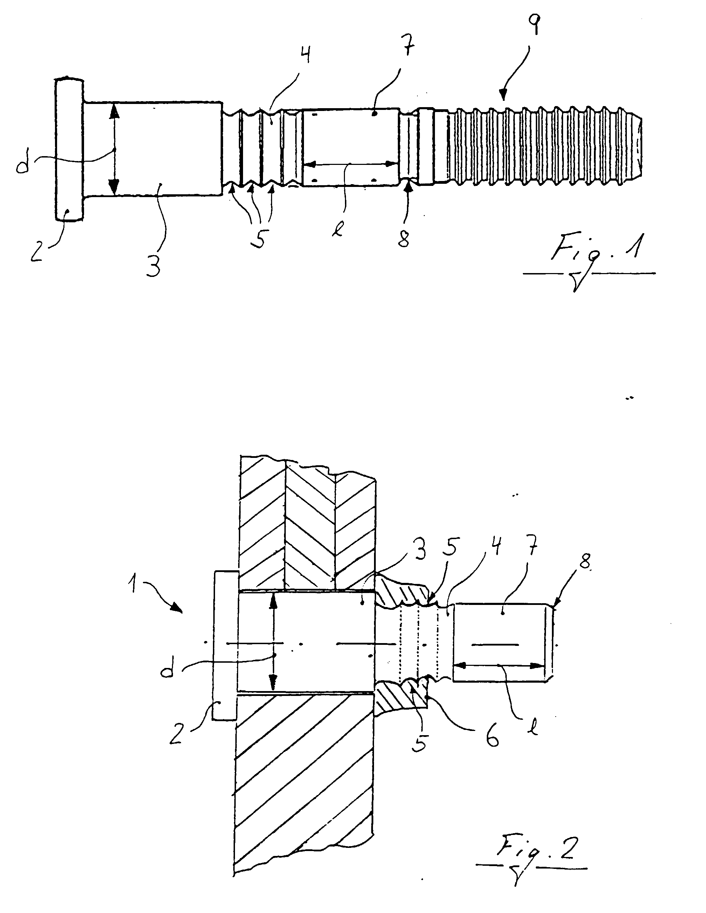

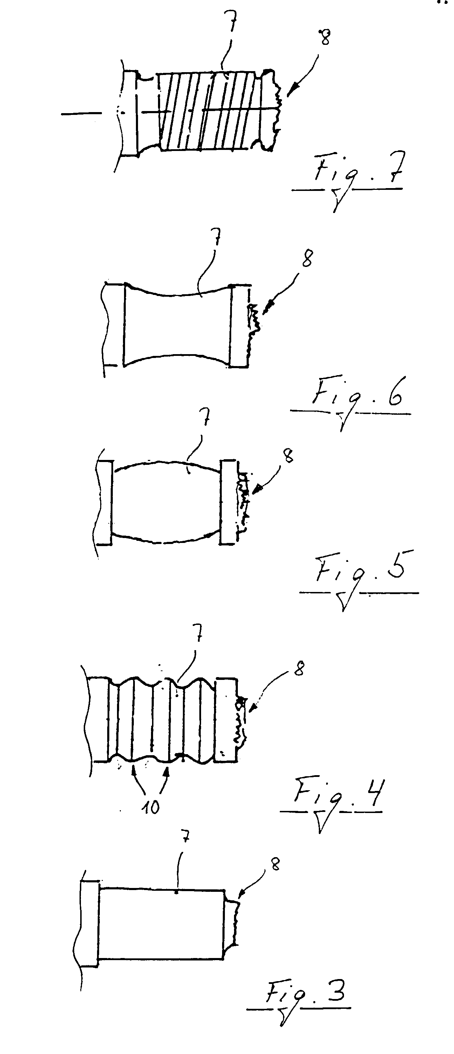

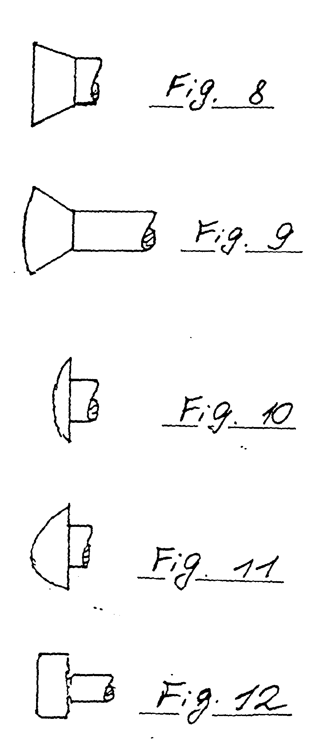

Einige Beispiele der Ausgestaltung sind in den Figuren 3 bis 7 dargestellt. Insbesondere kann ein rundzylindrischer Funktionalschaftbereich 7 vorliegen, dieser Rundzylinder kann mit über den Umfang des Funktionalschaftbereiches ausgebildeten Rippen 10 versehen sein - Fig. 4. An einem derart gestalteten Funktionalschaft können beispielsweise Wellensicherungen oder Starlock-Scheiben angesetzt werden. Ebenso ist eine konvexe oder konkave Profilierung des Funktionalschaftbereiches möglich - Fig. 5, Fig. 6 -, beispielsweise zum Einhängen von einem Haken bei konkaver Ausbildung bzw. von zwei Haken bei konvexer Ausbildung. Auch das Aufbringen eines Gewindes auf den Funktionalschaftbereich - Fig. 7 - ist möglich, um hieran weiterführende Teile anzuschrauben, beispielsweise Muttern oder andere Teile mit Innengewinde.

Eine Anwendung eines solchen Nietbolzens ergibt sich beispielsweise bei der Montage von Regaleinsätzen in LKW-Aufbauten, bei denen der vorstehende Funktionalschaftbereich zur Anbringung von weiteren Sicherungs- oder Transportmitteln verwendbar ist.

Ebenso können beispielsweise im Motorenbau Funktionsteile verbunden werden, die von derartigen Nieten zusammengehalten sind, wobei die Funktionalschaftbereiche der Nietbolzen etwa Federelemente aufnehmen können.

Es ist auch möglich, den Funktionalschaftbereich 7 mit einer oder mehreren Lochungen zu versehen.

Neben der Anpassung des Funktionalschaftbereiches 7 an verschiedenste Einsatzzwecke ist auch eine Anpassung der gesamten Nietkonstruktion an verschiedene Anforderungen möglich. So muß der Schließring nicht vollständig außerhalb der Nietbohrung liegen, sondern kann bereichsweise in diese hineinragen. Auch sind verschiedenste Formen der Nietköpfe 2 denkbar, die in den Fig. 8 bis 12 dargestellt sind. Figur 8 zeigt einen Senkkopf, Figur 9 einen Linsenkopf, Figur 10 einen Flachrundkopf, Figur 11 einen Rundkopf und Figur 12 einen Zylinderkopf.

Üblicherweise weist ein Nietbolzen 1 der vorgestellten Art an den Funktionalschaftbereich 7 anschließend eine Sollbruchstelle 8 auf, an die sich der Zugbereich 9 anschließt. Dieser Zugbereich 9 dient als Angreifbereich für ein Setzwerkzeug, das sich gegen die Bauteile abstützt und den Niet unter eine Zugspannung setzt, bevor der Schließring aufgebracht wird. Dadurch verbleibt auch nach Absetzen des Vernietungswerkzeuges der Niet mit dem aufgebrachten Schließring in einem vorgespannten Zustand. Nach der Montage kann an der Sollbruchstelle 8 der Zugbereich 9, der dann keine Funktion mehr hat, von dem restlichen Nietbolzen 1 über die Sollbruchstelle 8 abgetrennt werden.

## Patentansprüche

1. Nietbolzen zum Einsatz in eine Nietbohrung oder dergleichen, dessen Schaft einen profilierten Zugbereich (9) zum Angreifen eines Vernietungswerkzeuges und einen Konterschaftbereich (4) zum Ansetzen eines Konterringkörpers aufweist, **dadurch gekennzeichnet**, daß der Nietbolzen (1) einen die Länge der Nietbohrung und des von dem Konterringkörper (6) umgriffenen Konterschaftsbereiches (4) nach außen hin überragenden Funktionalschaftbereich (7) zur Aufnahme von sich an dem Funktionalschaftbereich (7) abstützenden Elementen aufweist, wobei die axiale Länge (l) des Funktionalschaftbereiches (7) zumindest halb so groß ist wie der Durchmesser (d) des Nietbolzens (1) im Bereich der Nietbohrung.

2. Nietbolzen nach Anspruch 1, **dadurch gekennzeichnet**, daß der Zugbereich (9) über eine Sollbruchstelle (8) mit dem Funktionalschaftbereich (7) verbunden und von diesem abtrennbar ist.

3. Nietbolzen nach einem der Ansprüche 1 bis 2, **dadurch gekennzeichnet**, daß der Funktionalschaftbereich (7) rundzylindrisch ausgebildet ist.

4. Nietbolzen nach einem der Ansprüche 1 bis 3, **dadurch gekennzeichnet**, daß der Funktionalschaftbereich (7) über den Umfang angeordnete Rippen (10) aufweist.

5. Nietbolzen nach einem der Ansprüche 1 bis 2 und 4, **dadurch gekennzeichnet**, daß der Funktionalschaftbereich (7) in axialer Richtung ein konvexes Profil ausbildet.

6. Nietbolzen nach einem der Ansprüche 1 bis 2 und 4, **dadurch gekennzeichnet**, daß der Funktionalschaftbereich (7) in axialer Richtung ein konkaves Profil ausbildet.

## Claims

1. A clinch bolt for insertion into a rivet bore or the like, the shank of which comprises a profiled pulling portion (9) for engagement of a riveting tool and a locking shank portion (4) to which a locking ring member can be applied, characterised in that the clinch bolt (1) comprises a functional shank portion (7) protruding outwardly beyond the length of the rivet bore and of the locking shank portion (4) around which the locking ring member (6) engages, said functional shank portion being intended to receive elements which are braced on the functional shank portion (7), the axial length (1) of the functional shank portion (7) being at least half as great as the diameter (d) of the clinch bolt (1) in the region of the rivet bore.

2. A clinch bolt according to claim 1, characterised in that the pulling portion (9) is connected to and can be separated from the functional shank portion (7) via a preset breaking point (8).

3. A clinch bolt according to one of claims I to 2, characterised in that the functional shank portion (7) is circularly cylindrical in construction.

4. A clinch bolt according to one of claims 1 to 3, characterised in that the functional shank portion (7) comprises fins (10) disposed around the periphery.

5. A clinch bolt according to one of claims 1 to 2 and 4, characterised in that the functional shank portion (7) has a convex profile in the axial direction.

6. A clinch bolt according to one of claims 1 to 2 and 4, characterised in that the functional shank portion (7) has a concave profile in the axial direction.

## Revendications

1. Goujon de rivetage pour utilisation dans un perçage ou similaire, portant sur sa tige une zone profilée de traction (9) permettant la prise d'un outil de rivetage, ainsi qu'une zone de contreblocage (4) pour recevoir une bague de verrouillage,
caractérisé en ce que
la tige du rivet (1) présente au-delà de la longueur du perçage et de la zone de contreblocage (4) accueillant la bague de verrouillage (6), vers l'extérieur, une zone fonctionnelle (7) pour accueillir des éléments venant s'appuyer sur cette zone, la longueur axiale (1) de cette zone était au moins égale à la moitié du diamètre (d) du goujon (1) dans la zone du perçage.

2. Goujon de rivetage selon la revendication 1,
caractérisé en ce que
la zone de traction (9) est reliée à la zone fonctionnelle (7) et peut en être séparée par une zone de rupture imposée (8).

3. Goujon de rivetage selon l'une quelconque des revendications 1 ou 2,
caractérisé en ce que
la zone fonctionnelle (7) a la forme d'un cylindre de section circulaire.

4. Goujon de rivetage selon l'une quelconque des revendications 1 à 3,
caractérisé en ce que
la zone fonctionnelle (7) porte sur sa périphérie, des nervures (10).

5. Goujon de rivetage selon l'une quelconque des revendications 1, 2 et 4,
caractérisé en ce que
la zone fonctionnelle (7) présente en direction axiale un profil convexe.

6. Goujon de rivetage selon l'une quelconque des revendications 1, 2 et 4,
caractérisé en ce que
la zone fonctionnelle (7) présente en direction axiale un profil concave.
